(19) Europäisches Patentamt / European Patent Office / Office européen des brevets

(11) **EP 3 067 779 B1**

(12) **EUROPEAN PATENT SPECIFICATION**

(45) Date of publication and mention
of the grant of the patent:
**03.07.2019  Bulletin 2019/27**

(51) Int Cl.:
*G06F 1/32* ^(2019.01)          *H04W 52/02* ^(2009.01)

(21) Application number: **16159877.6**

(22) Date of filing: **11.03.2016**

(54) **POWER MANAGING METHOD AND POWER SUPPLYING SYSTEM APPLYING THE POWER MANAGING METHOD**

STROMVERWALTUNGSVERFAHREN UND STROMVERSORGUNGSSYSTEM MIT ANWENDUNG DES STROMVERWALTUNGSVERFAHRENS

PROCÉDÉ DE GESTION DE PUISSANCE ET SYSTÈME D'ALIMENTATION APPLIQUANT LEDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.03.2015   US 201562132674 P**
**14.04.2015   PCT/CN2015/076525**
**07.05.2015   US 201562158061 P**
**11.06.2015   US 201562174168 P**
**11.11.2015   US 201514937895**

(43) Date of publication of application:
**14.09.2016   Bulletin 2016/37**

(73) Proprietor: **MediaTek Inc.**
**Hsin-Chu 300 (TW)**

(72) Inventors:
• **CHOU, Kai-Hsun**
  **New Taipei City 221 (TW)**
• **LO, Yong-Sheng**
  **Taichung City 408 (TW)**
• **CHAN, Yen-Shuo**
  **Taoyuan City 333 (TW)**
• **YANG, Fang-Shan**
  **Hsinchu County 302 (TW)**
• **YU, Chung-Hua**
  **Kaohsiung City 811 (TW)**

(74) Representative: **Hoefer & Partner Patentanwälte mbB**
**Pilgersheimer Straße 20**
**81543 München (DE)**

(56) References cited:
**EP-A1- 1 113 561          EP-A1- 2 605 489**
**EP-A2- 1 939 711          US-A1- 2010 145 643**
**US-A1- 2014 025 322**

**Description**

The present invention relates to a power managing method, and more particularly, to a power managing method that can allocate power not only according to the voltage but also according to real requirements and power managing supplying system applying the power managing method according to the pre-characterizing clauses of claims 1 and 10.

Conventionally, a portable electronic system such as a mobile phone, a laptop or a tablet pc comprises a battery to provide power. However, if a battery voltage is lower than a power threshold value, the portable electronic system will enter a power saving mode.

A conventional portable electronic system usually comprises a battery and one or more system modules, wherein the system modules can be any device provided in the electronic system. Conventionally, if the battery voltage is lower than the power threshold value, performances for all system modules will be reduced to save power.

However, since the performance for all system modules are reduced, the user may feel non-smoothly while using the portable electronic system. Also, the system modules may need different power when the portable electronic system is in the power saving mode, thus the conventional power managing method is not ideal.

Document EP 1 939 711 A2 discloses a power management apparatus for a system comprising a plurality of functional blocks to complete a task. The apparatus comprises a sensor for sensing a power supplement status of the system, a retrieval unit for retrieving a power consumption status of the task, and an adjuster for adjusting at least one of the plurality of functional blocks to complete the task according to the power supplement status and the power consumption status. Therein, the power supplement status is the remaining power of a battery of the system.

Document US 2010/0145643 A1 discloses a user-controlled application-based power management function which is provided for a battery-operated device. For each of a number of applications of the battery-operated device, the power management function enables a user of the battery-operated device to provide a usage parameter for the application defining a desired amount of usage of the application for each of one or more tasks. For each task, the power management function determines an estimated amount of battery life that is sufficient to provide the desired amount of usage of the application for the task and determines whether the estimated amount of battery life is available. If the estimated amount of battery life is available, the power management function allocates an amount of battery life corresponding to the estimated amount of battery life to the application for the task.

Document EP 1 113 561 A1 discloses a portable information terminal having a plurality of functions. The terminal comprises a plurality of function processing units which respectively perform the functions, a battery which supplies electric power to the function processing units, and a remaining battery charge detecting unit which detects remaining battery charge of the battery. The terminal further comprises a power supply control unit which compares the remaining battery charge with each of power supply limiting values determined in advance with respect to the function processing units, and, when the remaining battery charge becomes lower than at least one of the power supply limiting values of the function processing units, stops power supply to the at least one of the function processing units and/or outputs warning signals.

Document EP 2 605 489 A1 discloses that the capacity value of a battery is gradually degraded. Therein, the battery usable time period is calculated while considering such deterioration of the battery.

One objective of the present application is to provide a power managing method that can allocate power not only according to the voltage but also according to real requirements.

Another objective of the present application is to provide a power supplying system that can allocate power not only according to the voltage but also according to real requirements.

In accordance with an aspect of the invention, there is provided a power managing method according to appended claim 1.

In accordance with another aspect of the invention, there is provided a power supplying system according to appended claim 8.

Preferable features of the invention are defined in the appended dependent claims.

In view of above-mentioned embodiments, the power allocating can be optimized. Also, the electronic system can operate without reducing the performance thereof even the voltage of the power providing device is low, since the power managing method provided by the present invention not only refers to the voltage of the power providing device but also refer to other system information.

These and other objectives of the present invention will no doubt become obvious to those of ordinary skill in the art after reading the following detailed description of the preferred embodiment that is illustrated in the various figures and drawings.

In the following, the invention is further illustrated by way of example, taking reference to the accompanying drawings. Thereof

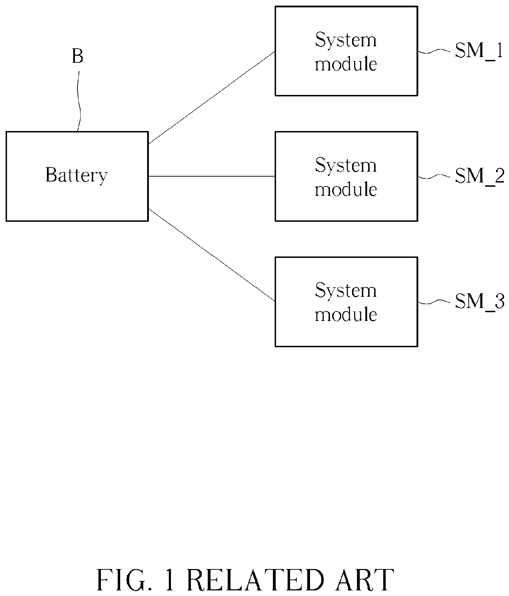

FIG.1 is a block diagram illustrating a conventional portable electronic system.
FIG.2 is a block diagram illustrating an electronic system according to one embodiment of the present invention.

FIG.3 is a flow chart illustrating a power managing method according to one embodiment useful for understanding the present invention.

FIG.4 is a schematic diagram summarizing the relations between the total power budget, the available power budget, and the system information.

FIG.5 is a flow chart illustrating detail steps for the power managing method according to one embodiment of the present invention.

FIG.6 is a flow chart illustrating a power managing method according to another embodiment useful for understanding the present invention.

FIG.7 is a flow chart illustrating a power managing method according to another embodiment useful for understanding the present invention.

In following descriptions, several embodiments are provided to explain the concept of the present application. It will be appreciated that these embodiments are only for example and do not mean to limit the scope of the present application.

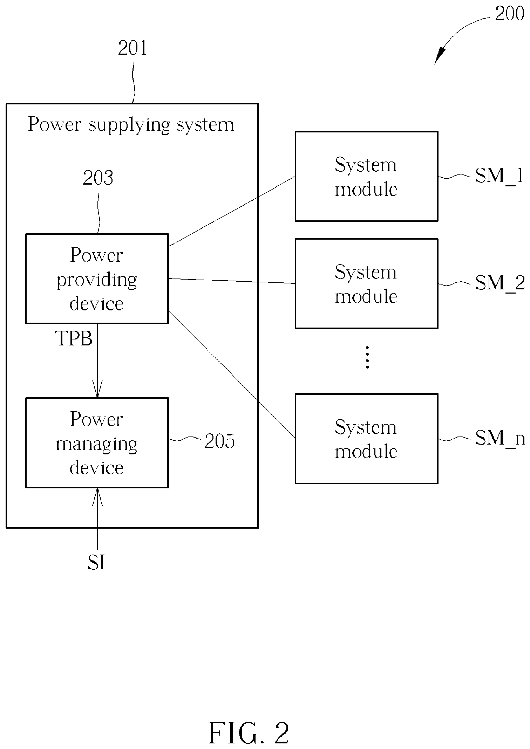

FIG.2 is a block diagram illustrating an electronic system according to one embodiment of the present application. As illustrated in FIG.2, the electronic system 200 comprises a power supplying system 201 and one or more system modules SM_1, SM_2...SM_n. The power supplying system 201 comprises a power providing device 203, and a power managing module 205. The electronic system 200 can be a portable electronic system or a non-portable electronic system. The power managing module 205 can be implemented by a hardware (ex. a circuit) or a hardware with firmware (ex. a processing unit). The power providing device 203 comprises at least one battery in this embodiment. However, the power providing device can be other devices such as a voltage transformer in other embodiments. The system modules SM_1, SM_2...SM_n can be any device provided in the electronic system. Please note, three system modules SM_1, SM_2 and SM_n are illustrated in the embodiment of FIG.2. However, the number for the system modules can be any other value (ex. 1, 2, 4, 5...).

In one embodiment, the system module(s) comprises one or more hardware modules, one or more software modules, or a combination thereof. The hardware module(s) comprises, for example, at least one of: a processor or a processing unit (ex. a CPU), a lighting device (ex. a camera flash light), a communication device (ex. a modem), an image capturing device (ex. an image sensor), an image processing device (ex. a GPU), a sensing device (ex. a G sensor or a touch detecting device), a storage device, and a display device. The one or more software module(s) can be run by the one or more hardware modules and/or controlling respective operation of the hardware modules.

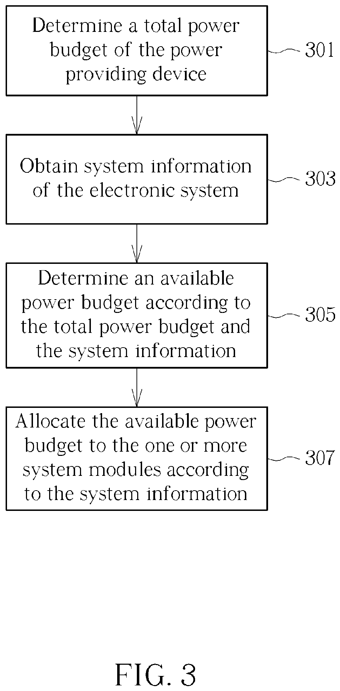

FIG.3 is a flow chart illustrating a power managing method according to one embodiment of the present application. Please refer to both FIG.2 and FIG.3 to understand the concept of the present application more clearly. The method in FIG.3 comprises following steps:

Step 301

The power managing module 205 determines a total power budget TPB of the power providing device 203.

Step 303

The power managing module 205 obtains system information SI of the electronic system 200.

The system information SI can be computed depending on real-time operating states or predicted operating states of the system modules, or be acquired from stored information (ex. a table stored in the electronic system), or a combination thereof.

Step 305

The power managing module 205 determines an available power budget according to the total power budget TPB and at least part of the system information SI.

Step 307

The power managing module 205 allocates the available power budget to the one or more system modules SM_1, SM_2...SM_n according to at least part of the system information SI.

In one embodiment, the steps 301-307 in FIG.3 are initiated when the electronic system meets a specific condition. For example, the electronic system performs a detecting step for detecting whether a voltage provided by the providing device is in a predetermined range. Also, the steps 301-307 are initiated in response to the detection that the voltage provided by the power providing device is in the predetermined range. Alternatively, in another other embodiment, the steps 301-307 are initiated at some pre-set timings. In still another embodiment, the steps 301-307 are initiated while the electronic system receives a trigger command.

The definitions of total power budget TPB, system information SI, and available power budget will be described in following descriptions. Also, details for the operation of allocating the available power budget to the one or more system modules will be described in following descriptions as well.

In one embodiment, the system information SI comprises either or both of current leakage information and fixed resource budget information. In such an embodiment, the step 303 in FIG.3 comprises determining the available power budget according to the total power budget TPB and either or both of the current leakage information and the fixed resource budget information. In one embodiment, such an operation can be shown as Equation (1).

$$\text{Available power budget} =$$
$$\text{Total power budget} - (\text{Current leakage information and/or}$$
$$\text{Fixed resource budget information})$$
$$\text{Equation (1)}$$

In one embodiment, the current leakage information indicates the leakage for the one or more system modules SM_1-SM_3 that are currently activated and so can be dynamically varied. For example, the one or more system modules include a CPU and a GPU. The CPU has a leakage x mW while it is activated. The GPU has a leakage y mW while it is activated. In one situation, the current leakage information indicates the value x mW for the CPU when the CPU is currently activated. In another situation, the current leakage information indicates the value y mW for the GPU when the GPU is currently activated. In further another situation, the current leakage information indicates the value x mW added by the value y mW for the CPU when the CPU and the GPU are both currently activated. In one embodiment, the current leakage information can indicate the leakage for a system module even when the system module is not currently activated, for example, in a standby or low-power mode. It is also noted in one embodiment, the system module(s) involving include only system module(s) internal to the electronic system. In an alternative embodiment, the system module(s) involving include not only system module(s) internal to the electronic system but also system module(s) external to the electronic system. In one embodiment, the leakage for the CPU can be referred to a look-up table or calculated by any formulas implemented by any software or hardware or combination form. For example, the leakage for the system module can be determined according to at least one of operating voltage, operating current, temperature, and number of active cores (for CPU case).

The fixed resource budget information indicates the power budget that the system module occupies or supposed to occupy. For example, a communication device (e.g. a modem) is activated and needs P mW to keep activated. In such case, the fixed resource budget information is P mW. Alternatively, in another embodiment, the communication device is activated and needs P mW to keep activated and is supposed to further occupy Q mW to process tasks/requests. In such embodiment, the fixed resource budget information is P+Q mW.

For more detail, the above-mentioned system information SI may comprise real-time system operating information about one or more respective real-time operation conditions/requirements of the one or more system modules. This also means that the step 307 in FIG.3 can comprise allocating the available power budget to the one or more system modules according to the real-time system operating information. In one embodiment, the real-time system operating information comprises either or both of one or more real-time operating states (ex. the power that the system module already occupies) and one or more predicted operating states of the one or more system modules (ex. the power that the system module is predicted to occupy) . In one embodiment, the one or more real-time operating state is determined by one or more requests that are already generated by the one or more system modules, and/or the predicted operating state is determined by one or more requests that will be generated by the one or more system modules within a predetermined period of time. In another embodiment, the one or more real-time operating state is determined by one or more tasks being processed by the one or more system modules, and/or the predicted operating state is determined by one or more tasks that will be processed by the one or more system modules within a predetermined period of time.

With respect to the total power budget, it indicates the total power that can be offered to the electronic system. The total power budget may be determined by the voltage supplied by the power providing device 203. However, the total power budget may be also varied due to aging of the power providing device 203. In one embodiment, the total power budget is determined by the following Equations (2)-(4):

$$\text{Total power budget} = Imax * VBAT$$
$$\text{Equation (2)}$$

$$Imax=(VBAT-Vmin)/Rtotal$$

$$Equation\ (3)$$

$$Rtotal=Rpcb+Rac$$

$$Equation\ (4)$$

VBAT indicates the real-time maximum battery voltage. Vmin indicates an off threshold value. In other words, if the battery voltage is lower than the Vmin, the electronic system turns off. Rpcb indicates the impedance of the electronic system , which, for example, includes the impedance of a circuit board. Rac indicates the impedance of the battery.

In view of above-mentioned Equations (2)-(4), in one embodiment the step 301 in FIG.3 determines the total power budget according to at least a maximum battery voltage that the at least one battery can provide (ex. the VBAT) . In another embodiment, the step 301 in FIG.3 determines the total power budget further according to at least one factor indicating an aging status of the at least one battery. For example, the Rac of above-mentioned Equation (4) is the factor indicating the aging status of the battery. Please note the impedance of the battery is not limited to be determined by the aging of the battery, but also can be determined by the type of the battery. For example, a battery with low quality may have high impedance even it is new. On the contrary, a battery with high quality may have low impedance even if the aging thereof is old.

It is noted that, in other embodiments, the step 301 in FIG.3 can still determine the total power budget according to maximum battery voltage that the at least one battery can provide, the factor indicating an aging status of the at least one battery, and further according to a predetermined threshold voltage level (for example but not limited to the Vmin), by using any equations or algorithms to meet different requirements.

Furthermore, it is noted the step for determining the total power budget is not limited to above-mentioned combinations. Alternatively, in further another embodiment, the step for determining the total power budget does not determine according to the maximum battery voltage that the at least one battery can provide, but still according to the factor indicating an aging status of the at least one battery.

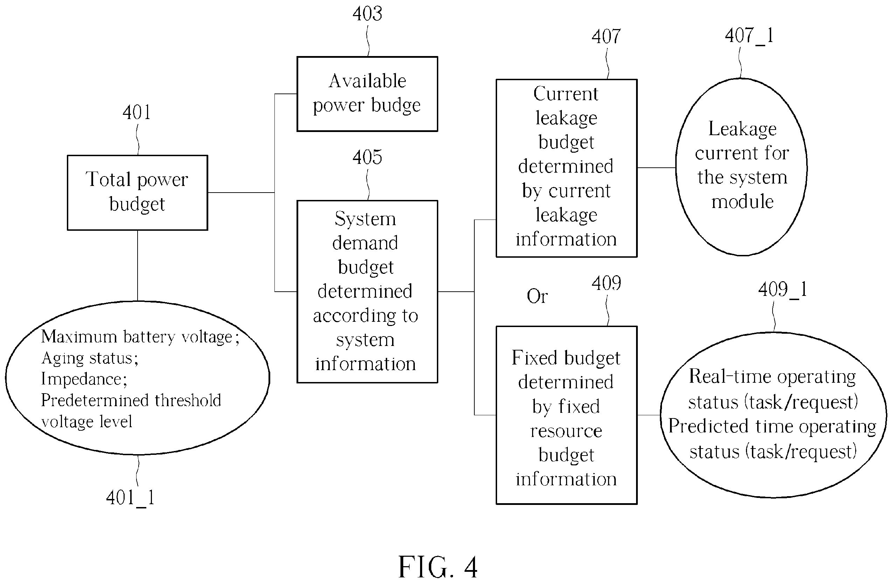

FIG.4 is a schematic diagram summarizing the relations between the total power budget, the available power budget, and the system information. Please note FIG.4 is only for the convenience of understanding but does not mean to limit the scope of the present application.

In FIG.4, the blocks 401, 403, 405, 407, 409 indicate different power budgets. Also, the blocks 401_1, 407_1 and 409_1 indicate the factors applied to determine different power budgets. For example, the total power budget 401 can be determined by the factors illustrated in the block 401_1. That is, the total power budget 401 can be determined by at least one of: the maximum battery voltage, the aging status for the battery, the impedance for the electronic system and/or the battery, and a predetermined threshold voltage level. The total power budget 401 can be separated into the available power budget 403 and the system demand budget 405. Accordingly, if the system demand budget 401 is obtained based on system information (ex. SI in FIG.2), the available power budget 403 can be acquired.

The system demand budget 401 can comprise at least one of: current leakage budget 407 and fixed resource budget 409. The current leakage budget 407 can be determined by the current leakage information. The current leakage information can comprise, for example, leakages for the system module(s) illustrated in the block 407_1. The fixed resource budget 409 can be determined by the fixed resource budget information. The fixed resource budget information can comprise, for example, at least one of the real-time operating state and the predicted-time operating state, which are illustrated in the block 409_1. The real-time operating state can be determined by the task that the system module already processes (or processing) or the request that the system module already generates (or generating). Also, the predicted-time operating state can be determined by the task that the system module will process within a predetermined period of time or the request that the system module will generate within a predetermined period of time.

After the available power budget is acquired, the power managing module 205 in FIG.2 can allocate power budget(s) to the system module(s). In other words, respective power budgets can be provided to the one or more system modules. The respective power budgets may be determined according to the system information. In one embodiment, the power managing module 205 can allocate the power budget(s) to the system module(s) based on a specific rule. For example, assuming the available power budget is enough to satisfying any demand of the system module(s), if a GPU is activated, the power managing module 205 will allocate a power budget P_1 to the GPU. In another embodiment, the power managing module 205 allocates the available power budget to the system module further according to task run by the system module and/or request generated by the system module. For example, assuming the available power budget is enough to satisfying any demand of the system module(s), a power budget P_2 is allocated to the GPU if the GPU is processing a task T_1. In another embodiment, the GPU needs to further process a task T_2 after the task T_1 is processed, thus a power budget P_3 besides the power budget P_2 is further allocated to the GPU. In another embodiment, assuming the available power budget is enough to satisfying any demand of the system module(s), if the GPU is activated, it is allocated a power budget P_1, and is further allocated power budget P_2 if the GPU generates a request R1. In another embodiment, the GPU will further generate a request R2 after the request R1 is generated, thus a power budget P_3 besides the power budget P_1, P_2 is further allocated to the GPU.

In one embodiment, the above-mentioned power budgets P_1, P_2, P_3 can indicate specific amount of power. In another embodiment, relations between the above-mentioned power budgets P_1, P_2, P_3 and the available power budget are specific ratios.

Many methods can be applied to predict the task or request in a following period of time. For example, a control unit is applied to control the operation of GPU. Accordingly, the control unit can know the tasks the GPU will process in a following period of time, or the requests the GPU will generate in a following period of time. It will be appreciated that this prediction method is only an example for explaining and does not mean to limit the scope of the present application.

The above-mentioned steps can be applied alone or in combination. Therefore, in view of above-mentioned embodiments, the step 307 in FIG.3 can further comprise: generating one or more respective power budgets (ex. P_1, P_2, P_3) respectively for the one or more system modules or for one or more tasks (ex. T_1, T_2) or for one or more requests (ex. R1, R2) generated by the one or more system modules according to the system information. The tasks can be associated with the requests.

In another embodiment, the system information SI comprises real-time system operating information about one or more respective requests (ex. R1, R2) generated by the one or more system modules.

The following equations (5) and (6) are examples for allocating the available power budget.

$$Multiple=$$

$$[Available\ power\ budget/(Task\_1rp+Task\_2rp...+Task\_nrp)]$$

Equation (5)

$$Task\_nap=Task\_nrp*Multiple$$

Equation (6)

The Task_1rp, Task_2rp... indicate the power budget initially requested for tasks. Also, the Task_nap indicate the power budget really allocated to the task. For example, the CPU has a Task_1 and requests for 1200mW for the Task_1. Also, the communication device has a Task_2 and requests for 800mW for the Taks_2. In such case, the Task_1rp=1200mW and the Task_2rp=800mW. Also, the available power budget is 1000mW. Accordingly, based on the Equation (5), the multiple=1000/(1200+800)=0.5.

Therefore, based on the Equation (6), the Task_1ap=1200*0.5=600mW, and the Task_2ap=800*0.5=400mW. Accordingly, the available power budget is allocated as different respective power budgets 600mW and 400mW to the CPU and communication device.

In view of the embodiment applying Equations (4) and (5), the step of the generating one or more respective power budgets for the one or more system modules according to the system information and the available power budget can further comprise: obtaining a total system real-time requirement according to the one or more respective real-time request generated by the one or more system modules (ex. Task_1rp+Task_2rp...+Task_nrp). In such a case, the step of the generating one or more respective power budgets for the one or more system modules according to the system information and the available power budget further comprises: generating the respective power budget for each of the one or more system modules or for one or more tasks associated with one or more requests generated by the one or more system modules by the available power budget and a ratio between the total system real-time requirement and the one or more respective requests of each of the one or more system modules . For example, Equation (5) computes the ratio "Multiple", and the power budget is acquired based on the multiple, as shown in Equation (6).

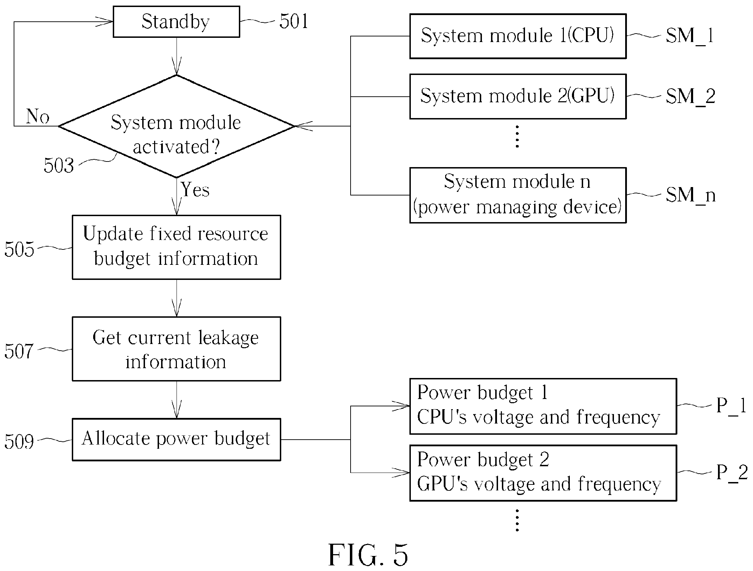

The above-mentioned steps can be summarized in FIG. 5, which is a flow chart illustrating detail steps for the power managing method according to one embodiment of the present application. Please note Fig.5 is only for the convenience of understanding and does not mean to limit the scope of the present application. In FIG.5, the system module 1 SM_1 is a CPU, the system module 2 SM_2 is a GPU...and the system module n SM_n is the power managing module. Also, in FIG.5 the system information comprises both the fixed resource budget information and the current leakage information.

The flow chart in FIG.5 comprises following steps:

Step 501

The electronic system is in a standby state.

Step 503

Determine if any system module is activated. If yes, go to step 505, if not, go back to the step 501.

Step 505

Update fixed resource budget information. As illustrated in FIG.4, the fixed resource budget information can be determined by real time operating states and/or predicted time operating status of the system module(s).

Step 507

Get current leakage information.

Step 509

The available power budget is acquired, and the step of allocating power budget is performed. As above-mentioned, the step of allocating power budget can be performed only based on which system modules are activated, and can be performed based on task and/or request as well.

As illustrated in FIG.5, the power budgets P_1, P_2 are respectively allocated to the system modules SM_1, SM_2. The steps of allocating power budget can be implemented via adjusting the factors for the system modules. For example, the voltage and the frequency of the CPU and the GPU are adjusted.

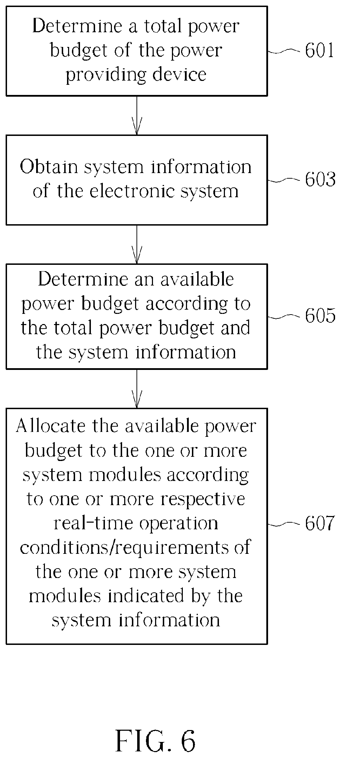

As above-mentioned, the power providing device 203 in FIG.2 is not limited to a battery. In such case, the available power budget is allocated according to real-time operation conditions/requirements. Accordingly, a power managing method illustrated in FIG.6 can be acquired, which comprises following steps:

Step 601

Determine a total power budget of the power providing device.

Step 603

Obtain system information of the electronic system.

Step 605

Determine an available power budget according to the total power budget and the system information.

Step 607

Allocate the available power budget to the one or more system modules according to one or more respective real-time operation conditions/requirements of the one or more system modules indicated by the system information.

As above-mentioned, the step of allocating power budget can allocate the available power budget according to task and/or request. Accordingly, the step 607 can comprise: generating one or more respective power budgets respectively for the one or more system modules, or for one or more tasks associated with one or more requests generated by the one or more system modules according to the system information and the available power budget.

Besides, the aging status for the power providing device may affect the total power budget. For example, the total power budget that an old power supplying circuit can provide is smaller than which of a new power supplying circuit. Accordingly, the embodiment in FIG.6 can comprise: wherein the system information comprises at least one factor indicating an aging status of the power providing device, and the step 605 comprises determining an available power budget according to at least the total power budget and the at least one factor indicating the aging status of the power providing device.

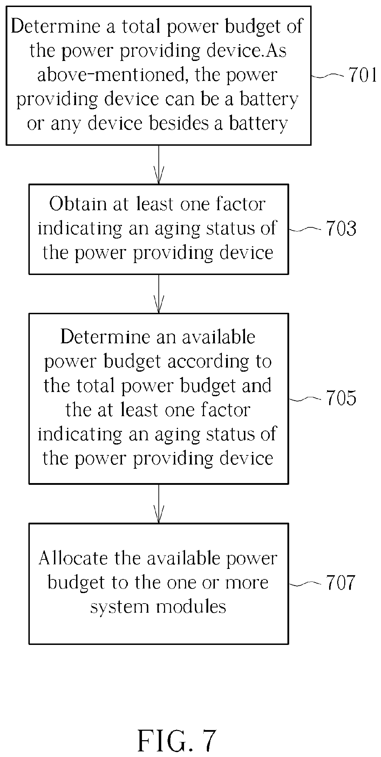

In one embodiment, the available power budget is determined according to the aging status of the power providing device. FIG.7 is a flow chart illustrates such embodiment, which comprises following steps:

Step 701

Determine a total power budget of the power providing device.

As above-mentioned, the power providing device can be a battery or any device besides a battery.

Step 703

Obtain at least one factor indicating an aging status of the power providing device.

As illustrated in FIG.4, the total power budget can be determined by at least one of following factors: a maximum battery voltage, an aging status of the power providing device, impedance of the electronic system, or a predetermined threshold voltage level.

Step 705

Determine an available power budget according to the total power budget and the at least one factor indicating an aging status of the power providing device.

Step 707

Allocate the available power budget to the one or more system modules.

Other detail steps for the embodiment depicted in FIG.7 can be acquired in view of above-mentioned embodiments, thus are omitted for brevity here.

In view of above-mentioned embodiments, the power allocating can be optimized. Also, the electronic system can operate without reducing the performance thereof even the voltage of the power providing device is low, since the power managing method provided by the present application not only refers to the voltage of the power providing device but also refer to other system information.

Those skilled in the art will readily observe that numerous modifications and alterations of the device and method may be made while retaining the teachings of the invention. Accordingly, the above disclosure should be construed as limited only by the metes and bounds of the appended claims.

**Claims**

1. A power managing method, applied to an electronic system (200) comprising a power providing device (203) and one or more system modules (SM_1, SM_2, SM_n), the power providing device (203) comprising at least one battery, the method comprising:

   (a) determining a total power budget (TPB) of the power providing device (203);
   (b) obtaining system information (SI) of the electronic system (200);
   (c) determining an available power budget according to the total power budget (TPB) and the system information (SI); and
   (d) allocating the available power budget to the one or more system modules (SM_1, SM_2, SM_n) according to the system information (SI);

   wherein the system information (SI) comprises real-time system operating information about one or more respective real-time operation requests of the one or more system modules (SM_1, SM_2, SM_n), and the step (d) comprises allocating the available power budget to the one or more system modules (SM_1, SM_2, SM_n) according to the real-time system request information;
   **characterized in that**
   allocating the available power budget to the one or more system modules (SM_1, SM_2, SM_n) according to the real-time system request information is performed by:

   generating a respective power budget for each of the one or more system modules (SM_1, SM_2, SM_n) or for each of one or more tasks associated with one or more requests generated by the one or more system modules (SM_1, SM_2, SM_n) by multiplying the available power budget by a ratio between the respective real-time operation request of the respective system module (SM_1, SM_2, SM_n), and a total system real-time operation requirement obtained by summing the one or more respective real-time operation requests of the one or more system modules (SM_1, SM_2, SM_n);

wherein the system information (SI) comprises current leakage information indicating leakage for the one or more of the system modules (SM_1, SM_2, SM_n) that are currently activated and for the one or more of the system modules (SM_1, SM_2, SM_n) that are not currently activated, and the step (c) comprises determining the available power budget according to the total power budget (TPB) and the current leakage information.

2. The power managing method of claim 1, wherein the system information (SI) comprises fixed resource budgets information, and the step (c) comprises determining the available power budget according to the total power budget (TPB) and both of the current leakage information and the fixed resource budgets information.

3. The power managing method of claim 1, wherein the real-time system request information comprises either or both of one or more real-time operating states and one or more predicted operating states of the one or more system modules (SM_1, SM_2, SM_n), or comprises information about either of both of one or more requests that are already generated by the one or more system modules (SM_1, SM_2, SM_n) and one or more requests that will be generated by the one or more system modules (SM_1, SM_2, SM_n) within a predetermined period of time, or comprises either or both of one or more tasks being processed by the one or more system modules (SM_1, SM_2, SM_n) and one or more tasks that will be processed by the one or more system modules (SM_1, SM_2, SM_n) within a predetermined period of time.

4. The power managing method of claim 1, wherein the step (a) comprises

determining the total power budget (TPB) according to at least a maximum voltage that the at least one battery can provide, or
determining the total power budget (TPB) according to at least one factor indicating an aging status of the at least one battery.

5. The power managing method of claim 1, wherein the one or more system modules (SM_1, SM_2, SM_n) comprises one or more hardware modules, one or more software modules, or a combination thereof.

6. The power managing method of claim 1, further comprising:

detecting whether a voltage provided by the power providing device (203) is in a predetermined range; and
initiating the steps (a)-(d) in response to the detection that the voltage provided by the power providing device (203) is in the predetermined range.

7. The power managing method of claim 1, wherein the system information (SI) comprises at least one factor indicating an aging status of the power providing device (203), and the step (c) comprises determining an available power budget according to at least the total power budget (TPB) and the at least one factor indicating the aging status of the power providing device (203).

8. A power supplying system (201), comprising:

a power providing device (203), comprising at least one battery;
one or more system modules (SM_1, SM_2, SM_n); and
a power managing module (205), to perform the method according to claims 1-7.

**Patentansprüche**

1. Energiemanagementverfahren, das auf ein Elektroniksystem (200) angewendet wird, das eine Energiebereitstellungsvorrichtung (203) und ein oder mehrere Systemmodule (SM_1, SM_2, SM_n) aufweist, wobei die Energiebereitstellungsvorrichtung (203) mindestens eine Batterie aufweist, wobei das Verfahren aufweist:

(a) Bestimmen eines Gesamtenergiebudgets (TPB) der Energiebereitstellungsvorrichtung (203);
(b) Erhalten von Systeminformationen (SI) des Elektroniksystems (200);
(c) Bestimmen eines verfügbaren Energiebudgets gemäß dem Gesamtenergiebudget (TPB) und den Systeminformationen (SI); und
(d) Zuweisen des verfügbaren Energiebudgets zu dem einen oder den mehreren Systemmodulen (SM_1, SM_2, SM_n) gemäß den Systeminformationen (SI);

wobei die Systeminformationen (SI) Echtzeit-Systembetriebsanforderungen des einen oder der mehreren Systemmodule (SM_1, SM_2, SM_n) aufweisen, und der Schritt (d) ein Zuweisen des verfügbaren Energiebudgets zu dem einen oder den mehreren Systemmodulen (SM_1, SM_2, SM_n) gemäß den Echtzeit-Systemanforderungsinformationen umfasst;

**dadurch gekennzeichnet, dass**

das Zuweisen des verfügbaren Energiebudgets zu dem einen oder den mehreren Systemmodulen (SM_1, SM_2, SM_n) gemäß den Echtzeit-Systemanforderungsinformationen ausgeführt wird durch:

Generieren eines jeweiligen Energiebudgets für jedes des einen oder der mehreren Systemmodule (SM_1, SM_2, SM_n) oder für jede von einer oder mehreren Aufgaben, die zu einer oder mehreren Anforderungen gehören, die von dem einen oder den mehreren Systemmodulen (SM_1, SM_2, SM_n) generiert werden, durch Multiplizieren des verfügbaren Energiebudgets mit einem Verhältnis zwischen der jeweiligen Echtzeit-Betriebsanforderung des jeweiligen Systemmoduls (SM_1, SM_2, SM_n) und einer gesamten System-Echtzeit-Betriebsanforderung, die durch Aufsummieren der einen oder der mehreren jeweiligen Echtzeit-Betriebsanforderungen des einen oder der mehreren Systemmodule (SM_1, SM_2, SM_n) erhalten wird;

wobei die Systeminformationen (SI) aktuelle Leckstrominformationen aufweisen, die einen Leckstrom für das eine oder die mehreren Systemmodule (SM_1, SM_2, SM_n), die aktuell aktiviert sind, und für das eine oder die mehreren Systemmodule (SM_1, SM_2, SM_n), die aktuell nicht aktiviert sind, anzeigen, und der Schritt (c) ein Bestimmen des verfügbaren Energiebudgets gemäß dem Gesamtenergiebudget (TPB) und den aktuellen Leckstrominformationen umfasst.

2. Energiemanagementverfahren gemäß Anspruch 1, wobei die Systeminformationen (SI) Informationen über feste Ressource-Budgets aufweisen, und der Schritt (c) ein Bestimmen des verfügbaren Energiebudgets gemäß dem Gesamtenergiebudget (TPB) und sowohl den aktuellen Leckstrominformationen als auch den Informationen über feste Ressource-Budgets umfasst.

3. Energiemanagementverfahren gemäß Anspruch 1, wobei die Echtzeit-Systemanforderungsinformationen einzelne oder beide von einem oder mehreren Echtzeit-Betriebszuständen und einem oder mehreren Vorhersage-Betriebszuständen des einen oder der mehreren Systemmodule (SM_1, SM_2, SM_n) umfassen, oder Informationen über einzelne oder beide von einer oder mehreren Anforderungen, welche bereits von dem einen oder den mehreren Systemmodulen (SM_1, SM_2, SM_n) generiert sind, und einer oder mehreren Anforderungen, welche von dem einen oder den mehreren Systemmodulen (SM_1, SM_2, SM_n) innerhalb einer vorbestimmten Zeitspanne generiert werden, umfassen, oder einzelne oder beide von einer oder mehreren Aufgaben, welche durch das eine oder die mehreren Systemmodule (SM_1, SM_2, SM_n) bearbeitet werden, und einer oder mehreren Aufgaben, welche durch das eine oder die mehreren Systemmodule (SM_1, SM_2, SM_n) innerhalb einer vorbestimmten Zeitspanne bearbeitet werden, umfassen.

4. Energiemanagementverfahren gemäß Anspruch 1, wobei der Schritt (a) ein Bestimmen des Gesamtenergiebudgets (TPB) gemäß mindestens einer Maximalspannung, welche die mindestens ein Batterie bereitstellen kann, oder ein Bestimmen des Gesamtenergiebudgets (TPB) gemäß mindestens einem Faktor, der einen Alterungszustand der mindestens einen Batterie anzeigt, umfasst.

5. Energiemanagementverfahren gemäß Anspruch 1, wobei das eine oder die mehreren Systemmodule (SM_1, SM_2, SM_n) ein oder mehrere Hardware-Module, ein oder mehrere Software-Module oder eine Kombination davon aufweisen.

6. Energiemanagementverfahren gemäß Anspruch 1, weiter aufweisend:

Erkennen, ob eine Spannung, die durch die Energiebereitstellungsvorrichtung (203) bereitgestellt wird, in einem vorbestimmten Bereich liegt; und

Initiieren der Schritte (a) - (d) als Reaktion auf das Erkennen, dass die Spannung, die durch die Energiebereitstellungsvorrichtung (203) bereitgestellt wird, in dem vorbestimmten Bereich liegt.

7. Energiemanagementverfahren gemäß Anspruch 1, wobei die Systeminformationen (SI) mindestens einen Faktor aufweisen, der einen Alterungszustand der Energiebereitstellungsvorrichtung (203) anzeigt, und der Schritt (c) ein Bestimmen eines verfügbaren Energiebudgets gemäß mindestens dem Gesamtenergiebudget (TPB) und dem mindestens einen Faktor, der den Alterungszustand der Energiebereitstellungsvorrichtung (203) anzeigt, umfasst.

8. Energieversorgungssystem (201), aufweisend:

eine Energiebereitstellungsvorrichtung (203), die mindestens eine Batterie aufweist;
ein oder mehrere Systemmodule (SM_1, SM_2, SM_n); und
ein Energiemanagementmodul (205), um das Verfahren gemäß den Ansprüchen 1-7 auszuführen.

**Revendications**

1. Procédé de gestion de puissance, appliqué à un système électronique (200) comprenant un dispositif de fourniture de puissance (203) et un ou plusieurs module(s) de système (SM_1, SM_2, SM_n), le dispositif de fourniture de puissance (203) comprenant au moins une batterie, le procédé comprenant le fait :

   (a) de déterminer un budget de puissance total (TPB) du dispositif de fourniture de puissance (203) ;
   (b) d'obtenir des informations de système (SI) du système électronique (200) ;
   (c) de déterminer un budget de puissance disponible en fonction du budget de puissance total (TPB) et des informations de système (SI) ; et
   (d) d'attribuer le budget de puissance disponible au ou aux plusieurs module(s) de système (SM_1, SM_2, SM_n) en fonction des informations de système (SI) ;

   où les informations de système (SI) comprennent des informations de fonctionnement de système en temps réel concernant une ou plusieurs demande(s) de fonctionnement en temps réel respective(s) du ou des plusieurs module(s) de système (SM_1, SM_2, SM_n), et l'étape (d) comprend l'attribution du budget de puissance disponible au ou aux plusieurs module(s) de système (SM_1, SM_2, SM_n) en fonction des informations de demande de système en temps réel ;
   **caractérisé en ce que**
   l'attribution du budget de puissance disponible au ou aux plusieurs module(s) de système (SM_1, SM_2, SM_n) en fonction des informations de demande de système en temps réel est effectuée :

   en générant un budget de puissance respectif pour chacun du ou des plusieurs module(s) de système (SM_1, SM_2, SM_n) ou pour chacune d'une ou de plusieurs tâche(s) associée(s) à une ou plusieurs demande(s) générée(s) par le ou les plusieurs module(s) de système (SM_1, SM_2, SM_n) en multipliant le budget de puissance disponible par un rapport entre la demande de fonctionnement en temps réel respective du module de système respectif (SM_1, SM_2, SM_n) et une exigence de fonctionnement en temps réel de système totale obtenue en sommant la ou les plusieurs demande(s) de fonctionnement en temps réel respective(s) du ou des plusieurs module(s) de système (SM_1, SM_2, SM_n) ;
   où les informations de système (SI) comprennent des informations de fuite de courant indiquant une fuite pour le ou les plusieurs des modules de système (SM_1, SM_2, SM_n) qui sont actuellement activés et pour le ou les plusieurs des modules de système (SM_1, SM_2, SM_n) qui ne sont pas actuellement activés, et l'étape (c) comprend le fait de déterminer le budget de puissance disponible en fonction du budget de puissance total (TPB) et des informations de fuite de courant.

2. Procédé de gestion de puissance de la revendication 1, dans lequel les informations de système (SI) comprennent des informations de budgets de ressources fixes, et l'étape (c) comprend le fait de déterminer le budget de puissance disponible en fonction du budget de puissance total (TPB) ainsi que des informations de fuite de courant et des informations de budgets de ressources fixes.

3. Procédé de gestion de puissance de la revendication 1, dans lequel les informations de demande de système en temps réel comprennent un ou plusieurs état(s) de fonctionnement en temps réel et/ou un ou plusieurs état(s) de fonctionnement prédit(s) du ou des plusieurs module(s) de système (SM_1, SM_2, SM_n) ou comprennent des informations concernant une ou plusieurs demande(s) qui est/sont déjà générée(s) par le ou les plusieurs module(s) de système (SM_1, SM_2, SM_n) et/ou une ou plusieurs demande(s) qui sera/seront générée(s) par le ou les plusieurs module(s) de système (SM_1, SM_2, SM_n) dans une période prédéterminée, ou comprennent une ou plusieurs tâche(s) qui est/sont traitée(s) par le ou les plusieurs module(s) de système (SM_1, SM_2, SM_n) et/ou une ou plusieurs tâche(s) qui sera/seront traitée(s) par le ou les plusieurs module(s) de système (SM_1, SM_2, SM_n) dans une période prédéterminée.

4. Procédé de gestion de puissance de la revendication 1, dans lequel l'étape (a) comprend
la détermination du budget de puissance total (TPB) en fonction d'au moins une tension maximale que l'au moins une batterie peut fournir, ou

la détermination du budget de puissance total (TPB) en fonction d'au moins un facteur indiquant un état de vieillissement de l'au moins une batterie.

**5.** Procédé de gestion de puissance de la revendication 1, dans lequel le ou les plusieurs module(s) de système (SM_1, SM_2, SM_n) comprend/comprennent un ou plusieurs module(s) matériel(s), un ou plusieurs module(s) logiciel(s) ou une combinaison de ceux-ci.

**6.** Procédé de gestion de puissance de la revendication 1, comprenant en outre le fait :

de détecter si une tension fournie par le dispositif de fourniture de puissance (203) se situe dans une plage prédéterminée ; et
d'initier les étapes (a) à (d) en réponse à la détection que la tension fournie par le dispositif de fourniture de puissance (203) se situe dans la plage prédéterminée.

**7.** Procédé de gestion de puissance de la revendication 1, dans lequel les informations de système (SI) comprennent au moins un facteur indiquant un état de vieillissement du dispositif de fourniture de puissance (203), et l'étape (c) comprend le fait de déterminer un budget de puissance disponible en fonction d'au moins le budget de puissance total (TPB) et de l'au moins un facteur indiquant l'état de vieillissement du dispositif de fourniture de puissance (203).

**8.** Système d'alimentation électrique (201), comprenant :

un dispositif de fourniture de puissance (203), comprenant au moins une batterie ;
un ou plusieurs module(s) de système (SM_1, SM_2, SM_n) ; et
un module de gestion de puissance (205) pour mettre en oeuvre le procédé selon les revendications 1 à 7.

FIG. 1 RELATED ART

FIG. 2

Determine a total power budget of the power providing device — 301

Obtain system information of the electronic system — 303

Determine an available power budget according to the total power budget and the system information — 305

Allocate the available power budget to the one or more system modules according to the system information — 307

FIG. 3

401_1 — Maximum battery voltage; Aging status; Impedance; Predetermined threshold voltage level

401 — Total power budget

403 — Available power budge

405 — System demand budget determined according to system information

407 — Current leakage budget determined by current leakage information

407_1 — Leakage current for the system module

Or

409 — Fixed budget determined by fixed resource budget information

409_1 — Real-time operating status (task/request) Predicted time operating status (task/request)

FIG. 4

```
                Standby ───501          ┌─────────────────────────┐
                   │                     │ System module 1(CPU)    │──SM_1
                   │                     └─────────────────────────┘
                   ▼                     ┌─────────────────────────┐
         ╱─────────────────╲            │ System module 2(GPU)    │──SM_2
    No  ╱   System module    ╲          └─────────────────────────┘
   ◄───◄     activated?       ◄──────            ⋮
        ╲                    ╱            ┌─────────────────────────┐
     503 ╲─────────────────╱             │ System module n         │──SM_n
                   │Yes                  │ (power managing device) │
                   ▼                     └─────────────────────────┘
        ┌─────────────────────┐
    505 │ Update fixed resource│
        │  budget information │
        └─────────────────────┘
                   │
                   ▼
        ┌─────────────────────┐
    507 │  Get current leakage │
        │     information     │
        └─────────────────────┘
                   │
                   ▼                     ┌─────────────────────────┐
        ┌─────────────────────┐         │ Power budget 1          │──P_1
    509 │ Allocate power budget│────────►│ CPU's voltage and frequency│
        └─────────────────────┘         └─────────────────────────┘
                                        ┌─────────────────────────┐
                                        │ Power budget 2          │──P_2
                                        │ GPU's voltage and frequency│
                                        └─────────────────────────┘
                                                  ⋮
```

FIG. 5

Determine a total power budget of the power providing device ⌐∼ 601

Obtain system information of the electronic system ⌐∼ 603

Determine an available power budget according to the total power budget and the system information ⌐∼ 605

Allocate the available power budget to the one or more system modules according to one or more respective real-time operation conditions/requirements of the one or more system modules indicated by the system information ⌐∼ 607

FIG. 6

Determine a total power budget of the power providing device. As above-mentioned, the power providing device can be a battery or any device besides a battery — 701

Obtain at least one factor indicating an aging status of the power providing device — 703

Determine an available power budget according to the total power budget and the at least one factor indicating an aging status of the power providing device — 705

Allocate the available power budget to the one or more system modules — 707

FIG. 7

## REFERENCES CITED IN THE DESCRIPTION

**Patent documents cited in the description**

- EP 1939711 A2
- US 20100145643 A1
- EP 1113561 A1
- EP 2605489 A1